# EUROPEAN PATENT SPECIFICATION

(11) **EP 0 384 700 B1**
(45) Date of publication and mention of the grant of the patent: **21.07.1993**
(21) Application number: 90301796.0
(22) Date of filing: 20.02.1990
(51) Int. Cl.: F16B 37/04

(54) **Nut fixing structure for resinous case**
Mutterbefestigungsstruktur für ein Kunstharzgehäuse
Structure de fixation d'un écrou pour boîtier en résine synthétique

(30) Priority: 22.02.1989 JP 20062/89
(43) Date of publication of application: 29.08.1990
(73) Proprietor: JIDOSHA DENKI KOGYO KABUSHIKI KAISHA, Yokohama-city, Kanagawa-prefecture (JP)
(72) Inventor: Sekine, Shuji, c/o Jidosha Denki Kogyo K. K., Yokohama-City, Kanagawa-Prefecture (JP); Harada, Naoto, c/o Jidosha Denki Kogyo K. K., Yokohama-City, Kanagawa-Prefecture (JP)
(74) Representative: Driver, Virginia Rozanne

(56) References cited:
- FR-A- 978 963
- GB-A- 348 631
- US-A- 2 112 594

## Description

This invention relates to a nut fixing structure for a resinous case used for fixing a nut corresponding to a bolt on the resinous case when mounting, for example, the resinous gear case provided on a power window motor for a motor vehicle to the vehicle body using the bolt corresponding to said nut.

Heretofore, for example, in case of mounting a power window motor on the vehicle body, the motor is fixed to the vehicle body by tightening a bolt passed through a motor setting bracket provided on the vehicle body into a nut embedded into a resinous gear case provided to said motor by the insert moulding process.

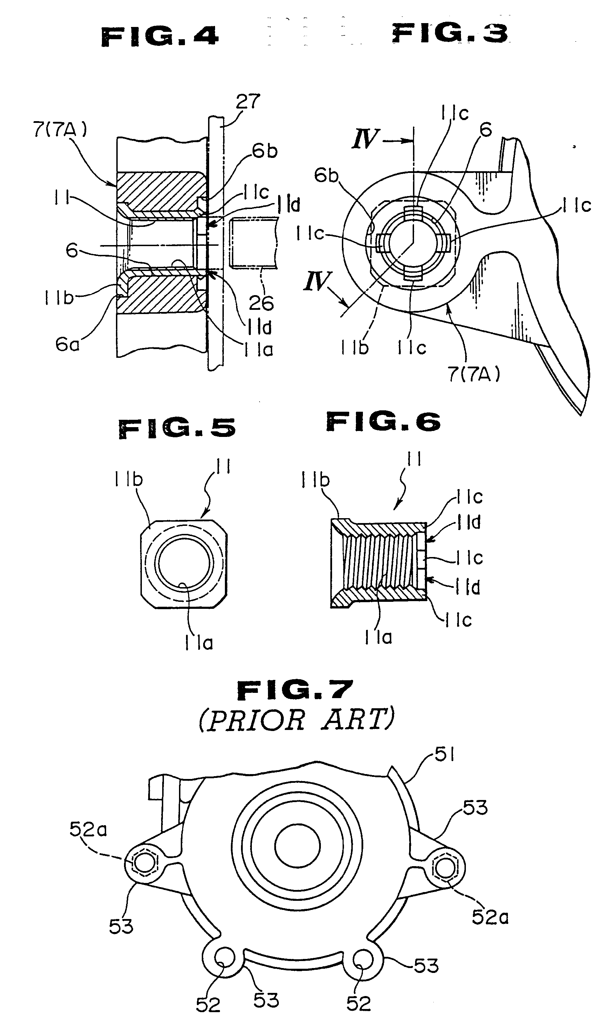

In this case, as shown in Figure 7, protruding portion 53's having through hole 52's are formed at plural places on the outer periphery of a gear case 51, and a nut 52a is provided on the reverse side in Figure 7 of the protruding portion 53 corresponding to a bolthole in the bracket amoung these protruding portion 53's by the insert moulding process. And said gear case 51 is fixed to the bracket by tightening the bolt into said nut 52a through the through hole 52.

However, in the case the gear case 51 is fixed to the motor setting bracket by tightening the bolt into the nut 52a insert-moulded in the resinous gear case 51 at the time of mounting the power window motor on the vehicle body as described above, a gap may appear between the gear case 51 and the nut 52a due to difference of their thermal expansivity under the environment with outstanding temperature changes, and there is the possibility that play comes out between said power window motor and the motor setting bracket owing to looseness of the nut 52a. And there is a problem since there is a possibility that the circumference of the nut 52a of the gear case 51 will disintegrate and the protruding portion 53 will crack in case of applying tightening torque to the bolt too much.

Furthermore, there is another problem in that the manufacture of the resinous gear case 51 provided with the nut 52a by insert moulding process can not necessarily contribute to the decrease of the cost.

FR-A-978963, corresponding to the preamble of claim 1, discloses a nut having a thin elongate tab arranged to be pressed outwardly over the whole periphery of the nut to constitute a circumferential collar. This nut suffers from the disadvantage expressed above that too much torque applied to a bolt may deform the nut and case so that it is not possible to assemble them accurately.

An object of the invention is to provide a nut and case assembly in which provision is made to overcome the effects of too much torque being applied to a bolt when being secured to the nut.

According to the present invention there is provided a nut and case assembly comprising:
a resinous case including at least one protruding portion having first and second substantially parallel surfaces, a nut receiving hole extending through said protruding portion and a recess in said first surface surrounding one end of said hole;
a nut having anti-rotative flange means at one end thereof; and
a bendable tab provided on the opposite end of said nut;
said nut being fixed to said protruding portion of said resinous case by bending said tab of said nut outwardly when said nut is disposed in said hole with said anti-rotative flange means engaged in said recess, whereby there are a plurality of such bendable tabs which when bent into the inner periphery of the end of said nut receiving hole define therebetween a plurality of contact surfaces, corresponding to the remaining section of the end of said nut disposed flush with said second surface of said protruding portion when said nut is fixed to said protruding portion.

In this assembly by inserting the tabs of the nut into the nut fitting hole of the resinous case from the side of the flange receiving recess and fitting the nut into the nut fitting hole so as to engage the anti-rotative flange means of the nut with said flange receiving recess, the nut is restricted against movement in the rotational direction. In this state, by bending the tabs outwardly and pressing them over the edge of the nut fitting hole, the nut is restricted against movement in the axial direction, so that the nut is fixed firmly to the resinous case.

Moreover, in the process of fixing the resinous case to, for example, a bracket, the resinous case is fixed to the bracket without receiving immoderate force because the contact surfaces defined between the tabs prevent too much force being transferred to the case at the time of screwing a bolt into the nut.

Preferably, the case is provided with a minimum of five nut receiving holes so that the case can readily be mounted on various mounting brackets depending on the mounting position.

Thus, preferred embodiments of the invention provide a nut fixing structure for a resinous case which is free from occurence of play between the power window and the motor setting bracket even under severe temperature environments and free from trouble such as a crack in the gear case of the power window motor even if the bolt is tightened too much, and which is able to contribute to the decrease of the cost in the case where the resinous gear case provided to the power window motor is fixed to the motor setting bracket by tightening with the bolt at the time of mounting the motor on the vehicle body, for example.

For a better understanding of the present invention and to show how the same may be carried into effect, reference will now be made, by way of example, to the accompanying drawings in which:-
Figure 1 to Figure 6 show an embodiment of the nut fixing structure for the resinous case according to this invention, Figure 1 and Figure 2 are a front view and a rear elevation illustrating the resinous gear case provided to the power window motor for the motor vehicle, respectively;
Figure 3 is an enlarged detail illustrating the protruding portion in circle III shown in Figure 2;
Figure 4 is a sectional view along section lines IV - IV shown in Figure 3 ;
Figure 5 and Figure 6 are a detailed front view and a detailed sectional side view illustrating the nut, respectively ; and
Figure 7 is a fragmentary rear elevation illustrating the example of the conventional resinous gear case provided with nuts molded by the insert molding process.

### DESCRIPTION OF THE PREFERRED EMBODIMENT

An embodiment of the nut fixing structure for the resinous case according to this invention will be described below on basis of drawings.

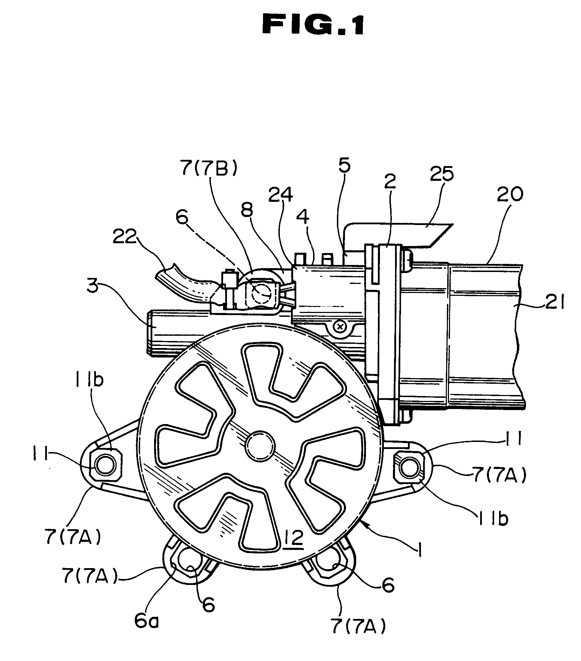

Figure 1 to Figure 6 show an embodiment of the nut fixing structure for the resinous case according to this invention, the case where a nut is fixed to a resinous gear case provided for a power window motor for a motor vehicle is exemplified in this embodiment.

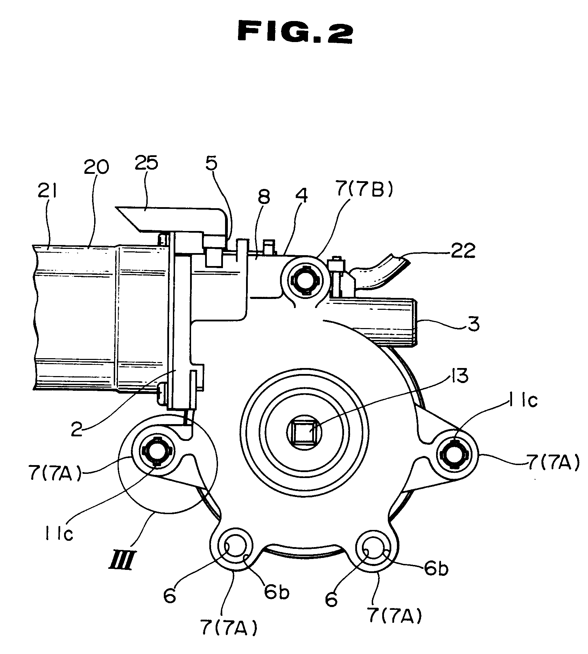

That is, as shown in Figure 1 and Figure 2, a resinous gear case 1 has a flat bottomed cylindrical shape approximately, and is provided on the outer periphery with an end bracket 2 for connecting to a motor case 21 of a power window motor 20, a bearing part 3 for receiving an end of an output shaft (not shown) of said motor 20, a lead wire connector 4 for connecting a lead wire 22 to supply said motor 20 with electric power to a holder base (not shown) disposed between said end bracket 2 and the motor case 21, and a cap holder 5 for fitting a breather cap 25 to take air in the inner part of the lead wire connector 4 closed up by a breather cover 24 in one body.

Said resinous gear case 1 is provided with protruding portion 7(7A)'s formed with a nut fitting hole 6 at plural places (that is, four places in this embodiment) on the outer periphery excepting the space occupied by said end bracket 2, the bearing part 3, the lead wire connector 4 and the cup holder 5, and also provided with a protruding portion 7(7B) formed with a nut fitting hole 6 and adjacent to said bearing part 3 (said protruding portion 7B is formed to the bearing part 3 continuously through a reinforcement 8).

Meanwhile, a nut 11 has a nearly cylindrical shape as shown in Figure 5 and Figure 6, and is formed with a female screw 11a on the inner periphery thereof. Said nut 11 is provided with a rectangular shaped antirotative flange 11b on one end thereof (the end on left side in Figure 6), and provided with caulking clicks in the form of bendable tabs 11c which can be bent outwardly at several places (that is, four places in this embodiment) on another end thereof (the end on right side in Figure 6).

The nut 11 is fitted and fixed in the nut fitting hole 6 of respectively three protruding portion 7's of the protruding portion 7's provided on said resinous gear case 1 (that is, the protruding portion 7A's on the left and right side in Figure 1 and the protruding portion 7B adjacent to the bearing part 3).

In this case, as shown in Figure 4, the nut fitting hole 6 is formed with a flange receiving recess 6a in a first surface of the protruding portion to be engaged with the anti-rotative flange 11b of the nut 11 on the leftward end thereof illustrated in the figure, and formed with a major hole 6b in a second surface of the protruding portion parallel to the first surface on the rightward end thereof. The nut 11 is fixed so as not to move in the rotational or axial direction by bending said tabs 11c's outwardly as also shown in Figure 3 and pressing them to the major hole 6b at the state in which the anti-rotative flange 11b of the nut 11 is engaged with the flange receiving recess 6a of the nut fitting hole 6. When the nut 11 is secured in the hole it can readily be seen from Figure 4 that the portions 11d intermediate the tabs 11c provide contact surfaces 11d, corresponding to the remaining section of the end of said nut, flush with the second surface of the protruding portion.

Additionally, the resinous gear case 1 is provided with the protruding portion 7, namely the nut fitting hole 6 in excess so as to enable the power window motor 20 to be disposed on another mounting position: the nut 11 is fixed to the protruding portion 7A selected properly among the protruding portion 7A's excepting the protruding portion 7B.

Numeral 12 shown in Figure 1 is a cover for covering the resinous gear case 1; numeral 13 shown in Figure 2 is an output shaft.

An explanation will be given on the procedure for fixing the nut 11 in the resinous gear case 1.

First of all, the end of the nut 11 having tabs 11c is inserted into the nut fitting hole 6 of the resinous gear case 1 corresponding to the mounting position of the power window motor 20 for the motor vehicle from the side of the protruding portion having the flange receiving recess 6a and the nut 11 is fitted into the nut fitting hole 6 so as to engage the antirotative flange 11b with said flange receiving recess 6a.

Subsequently, by bending the tabs 11c's of the nut 11 outwardly using a tool such as a punch and pressing them to the major hole 6b of the nut fitting hole 6, the nut 11 is fixed in the nut fitting hole 6 of the resinous gear case 1.

At this time, said nut 11 never rotates as the antirotative flange 11b is engaged to the flange receiving recess 6a of the nut fitting hole 6, and never moves in the axial direction as the tabs 11c's are engaged with the major hole 6b of the nut fitting hole 6.

The power window motor 20 provided with the resinous gear case 1 fixed with the nut 11's in such a manner is mounted on a motor setting bracket 27 shown in Figure 4 with two-dot chain line by screwing a bolt 26 shown with two-dot chain line into the female screw thread 11a of the nut 11 leftwardly from the right side in Figure 4. Hereupon, since the motor setting bracket 27 comes to contact with the content surfaces 11d of the nut between the tabs of the nut 11, the protruding portion 7 of the resinous gear case 1 is not applied with immoderate force and the protruding portion 7 is never cracked. This is due to the fact that the contact surfaces 11d are substantially flush with the second surface of the protruding portion when the nut is secured.

While the invention has been explained by exemplifying the case of fixing the nut in the resinous gear case provided for the power window motor for the motor vehicle in this embodiment, this invention is not restricted to such embodiment.

Furthermore, it has been explained in this embodiment that the nut fitting hole 6 of the resinous gear case 1 is formed with the major hole 6b, and the tabs 11c's of the nut 11 are engaged in said major hole 6b, but this invention is not restricted to this construction. The nut 11 may be fixed to the nut fitting hole 6 by embedding the bendable tabs 11c's into the inner periphery of the end of the nut fitting hole 6 without forming said major hole 6b. And also the front shape of the antirotative flange 11b of the nut 11 is not restricted to a rectangular shape, but could be any other shape except a round shape.

As explained above, the nut fixing structure for the resinous case according to the preferred embodiment of this invention comprises an antirotative flange provided to one end of a nut, a plurality of bendable tabs provided to another end of said nut which can be bent outwardly, a nut fitting hole provided to the resinous case, a flange receiving recess provided to said nut fitting hole for engaging with the antirotative flange of said nut, and said nut being fixed to the nut fitting hole of the resinous case by bending the tabs of the nut outwardly at the state in which said nut is fitted into the nut fitting hole and said antirotative flange is engaged with the flange receiving recess of said nut fitting hole. Therefore, for example, in the case the resinous gear case provided to the power window motor for the motor vehicle is fixed to the motor setting bracket using the bolt at the time of mounting the motor on the vehicle body, it is possible to prevent the play between the motor and the motor setting bracket because the gap between the resinous gear case and the nut does not appear and the nut never becomes loose even under thermally severe environment, and it is possible to prevent the resinous gear case from the breakage such as the crack even when the bolt is tightened too much because the contain surfaces of the nut between the tabs become in contact with the motor setting bracket. Accordingly, an excellent effect can be obtained that it is possible to reduce the cost because of good productivity in addition to above.

## Claims

1. A nut and case assembly comprising:
a resinous case (1) including at least one protruding portion (7A) having first and second substantially parallel surfaces, a nut receiving hole (6) extending through said protruding portion (7A) and a recess (6a) in said first surface surrounding one end of said hole (6);
a nut (11) having anti-rotative flange means (11b) at one end thereof, and a bendable tab (11c) provided on the opposite end of said nut (11);
said nut (11) being fixed to said protruding portion (7A) of said resinous case (1) by bending said tab (11c) of said nut (11) outwardly when said nut (11) is disposed in said hole (6) with said anti-rotative flange means (11b) engaged in said recess (6a), characterised in that there are a plurality of such bendable tabs (11c) which when bent into the inner periphery of the end of said nut receiving hole (6) define therebetween a plurality of contact surfaces (11d), corresponding to the remaining section of the end of said nut (11), disposed flush with said second surface of said protruding portion (7A) when said nut (11) is fixed to said protruding portion (7A).

2. A nut and case assembly as set forth in claim 1, wherein said anti-rotative flange means (11b) and said recess (6a) for receiving said anti-rotative flange means (11b) have complementary polygonal shapes.

3. A nut and case assembly as set forth in claim 1 or 2, wherein a plurality of said nut receiving holes (6) are provided in said resinous case (1) and a plurality of said nuts (11) are provided for engagement in a selected number of said holes (6) depending upon the configuration of a mounting bracket (27) to which said case (1) is adapted to be mounted.

4. A nut and case assembly as set forth in claim 3, wherein a minimum of five of said nut receiving holes (6) are provided in said case (1).

## Patentansprüche

1. Aus Mutter und Gehäuse bestehende Anordnung mit:
einem Kunstharzgehäuse (1) mit mindestens einem vorstehenden Teil (7A), der eine erste und zweite Oberfläche aufweist, die im wesentlichen parallel sind, eine Mutteraufnahmeöffnung (6), die sich durch den vorstehenden Teil (7A) erstreckt, und eine Einziehung (6a) in der ersten Oberfläche, die ein Ende der Öffnung (6) umfaßt;
einer Mutter (11) mit drehungsverhindernden Flanschmitteln (11b) an ihrem einen Ende, und einem biegbaren Streifen (11c) am anderen Ende der Mutter (11);
wobei die Mutter (11) am vorstehenden Teil (7A) des Kunstharzgehäuses (1) festgelegt ist, indem der Streifen (11c) der Mutter (11) nach außen gebogen wird, wenn die Mutter (11) in der Öffnung (6) angeordnet ist, wobei die drehungsverhindernden Flanschmittel (11b) in die Einziehung (6) eingreifen, dadurch gekennzeichnet, daß mehrere solche biegbaren Streifen (11c) vorgesehen sind, die beim Biegen in den Innenumfang des Endes der Mutteraufnahmeöffnung (6) zwischen sich mehrere Kontaktflächen (11d) entsprechend dem verbleibenden Querschnitt des Endes der Mutter (11) bilden, die bündig mit der zweiten Oberfläche des vorstehenden Teils (7A) liegen, wenn die Mutter (11) in dem vorstehenden Teil (7A) festgelegt ist.

2. Aus Mutter und Gehäuse bestehende Anordnung nach Anspruch 1, wobei die drehungsverhindernden Flanschmittel (11b) und die Einziehung (6a) zur Aufnahme der drehungsverhindernden Flanschmittel (11b) komplementäre Polygonformen aufweisen.

3. Aus Mutter und Gehäuse bestehende Anordnung nach Anspruch 1 oder 2, wobei eine Mehrzahl von Mutteraufnahmeöffnungen (6) am Kunstharzgehäuse (1) und eine Mehrzahl von Muttern (11) zum Eingriff in eine vorbestimmte Anzahl von Öffnungen (6) in Abhängigkeit von der Form eines Befestigungsbügels (27) vorgesehen sind, an welchem das Gehäuse (1) montiert werden soll.

4. Aus Mutter und Gehäuse bestehende Anordnung nach Anspruch 3, wobei mindestens fünf Mutteraufnahmeöffnungen (6) an dem Gehäuse (1) vorgesehen sind.

## Revendications

1. Ensemble écrou et boîtier comprenant :
un boîtier en résine synthétique (1) comprenant au moins une portion en projection (7A) comportant une première et une seconde surface sensiblement parallèles, un trou de fixation d'écrou (6) traversant ladite portion en projection (7A) et un évidement (6A) dans ladite première surface entourant une extrémité dudit trou (6);
un écrou (11) comportant une embase d'anti-rotation (11b) à une extrémité, et une languette flexible (11c) sur l'extrémité opposée dudit écrou (11);
ledit écrou (11) étant fixé à ladite portion en projection (7A) dudit boîtier en résine synthétique (1) en pliant ladite languette (11c) dudit écrou (11) vers l'extérieur lorsque ledit écrou (11) est disposé dans ledit trou (6) avec ladite embase d'anti-rotation (11b) engagée dans ledit évidement (6a), caractérisé en ce qu'une pluralité de languettes flexibles (11c) lorsqu'elles sont pliées dans la périphérie interne de l'extrémité dudit trou de fixation d'écrou (6) forment entre elles une pluralité de surfaces de contact (11d), correspondant à la section restante de l'extrémité dudit écrou (11), disposées de niveau avec ladite seconde surface de ladite portion en projection (7A) lorsque ledit écrou (11) est fixé à ladite portion en projection (7A).

2. Ensemble écrou et boîtier selon la revendication 1, dans lequel ladite embase d'anti-rotation (11b) et ledit évidement (6a) pour recevoir ladite embase d'anti-rotation (11b) ont des formes polygonales complémentaires.

3. Ensemble écrou et boîtier selon la revendication 1 ou 2, dans lequel une pluralité desdits trous (6) de fixation d'écrou sont ménagés dans ledit boîtier en résine (1) et une pluralité desdits écrous (11) sont destinés à être engagés dans un nombre sélectionné desdits trous (6) en fonction de la configuration d'une patte de montage (27) sur laquelle ledit boîtier (1) est adapté à être monté.

4. Ensemble écrou et boîtier selon la revendication 3, dans lequel un minimum de cinq trous (6) de fixation d'écrou sont ménagés dans ledit boîtier (1).
